# EUROPÄISCHE PATENTANMELDUNG

(11) **EP 2 919 003 A1**
(43) Veröffentlichungstag der Anmeldung: **16.09.2015**
(21) Anmeldenummer: 15000739.1
(22) Anmeldetag: 12.03.2015
(51) Int. Cl.: G01N 30/24, G01N 35/10

(54) **Probenaufgabe-Anordnung für ein HPLC-System mittels Einweg-Pipettierspitzen für das Überführen von Proben in das HPLC-System und Anwendung in Pipettier-Robotern**

(30) Priorität: 12.03.2014 CH 3802014
(71) Anmelder: Döbelin, Werner, 4153 Reinach (CH)
(72) Erfinder: Döbelin, Werner, 4153 Reinach (CH)
(74) Vertreter: Wüstefeld, Regine Marie

(57) **Zusammenfassung**

Die Erfindung betrifft eine Probenaufgabe-Anordnung für ein HPLC-System, mit Einweg-Pipettierspitzen, die eine Probentransfer-Einweg-Pipettierspitze (1) für ein Injizieren einer Probe in das HPLC-System und eine Waschlösung-Einweg-Pipettierspitze (3) für einen Waschvorgang umfassen, und mit einem Injektionsadapter (7) als Teil einer Injektionseinheit (9), die ein Injektorventil (11) und einen Ventilantrieb (13) aufweist. Probentransfer-Einweg-Pipettierspitze (1) und Waschlösung-Einweg-Pipettierspitze (3) sind voneinander verschieden und für den Eingriff in den Injektionsadapter (7) ausgebildet. Der Injektionsadapter (7) ist mit einem Hohlraum (15) versehen, der sich von seiner Probenaufnahmeseitigen Öffnung in Richtung auf die Injektionseinheit (9) in der Weise verjüngt, daß er definierte, voneinander verschiedene Anlagebereiche als Dichtbereiche für die Probentransfer-Einweg-Pipettierspitze (1) einerseits und die Waschlösung-Einweg-Pipettierspitze (3) andererseits ausbildet. Die Probentransfer-Einweg-Pipettierspitze (1) greift in Richtung auf die Injektionseinheit tiefer in den Injektionsadapter (7) ein als die Waschlösung-Einweg-Pipettierspitze (3).

Die Erfindung betrifft auch ein Verfahren zur Probenaufgabe in einem HPLC-System.

## Beschreibung

Die Erfindung betrifft eine Probenaufgabe-Anordnung für ein HPLC-System mit Einweg-Pipettierspitzen, insbesondere zur Anwendung in Pipettier-Robotern, und ein entsprechendes Verfahren zur Probenaufgabe.

Bei herkömmlichen, in der Hochleistungs-Flüssigkeitschromatographie (HPLC) verwendeten Probengebern wird eine Probe aus einem Probengefäß entnommen, in eine Probenschlaufe dosiert und anschließend injiziert. Nach jeder Probeninjektion müssen die mit der jeweiligen Probe in Berührung gekommenen Bereiche gewaschen werden, um eine Probenverschleppung (Crosscontamination) möglichst zu minimieren, da sonst das analytische Ergebnis verfälscht oder unbrauchbar gemacht wird.

Im Rahmen einer solchen Probenaufgabe in HPLC-Systemen werden daher seit langem große Anstrengungen unternommen, um die Injektion und das Überführen von Proben in das HPLC-System so zu gestalten, daß möglichst mit geringem Aufwand exakte und reproduzierbare Resultate erhalten werden. Ein Ziel ist es dabei, eine möglichst geringe Probenverschleppung zu erreichen. Dazu sind herkömmliche HPLC-Probengeber in der Regel aufwendig gebaut, wobei immer der gleiche Bereich mit der Probe kontaminiert wird und dann aufwendig gewaschen werden muß, um die Probenverschleppung möglichst gering zu halten. Erschwert wird das Erreichen dieses Ziels noch dadurch, daß die Auflösung der HPLC-Detektoren immer empfindlicher wird. Neuere HPLC-Detektoren arbeiten bereits mit einer so hohen Auflösung, daß selbst Probenverschleppungen von 1 zu 10 000 noch nachweisbar und quantifizierbar sind.

Außerdem ist zu berücksichtigen, daß immer mehr der Bedarf besteht, die Proben möglichst unmittelbar nach der Aufarbeitung dem HPLC-System zuzuführen und zu messen. Auf diese Weise soll Veränderungen der Probe(n) vorgebeugt werden, welche sich in der Zeit zwischen der Probenaufarbeitung und der Messung ergeben können.

Der Erfindung liegt daher die Aufgabe zugrunde, ein HPLC-Probengebersystem unter Verwendung von Einweg-Pipettierspitzen bereitzustellen, mit dem Proben möglichst zeitnah nach deren Aufarbeitung in ein HPLC-System überführt werden können, wobei das Waschen der mit der jeweiligen Probe in Berührung gekommenen Bereiche in einer Weise durchgeführt werden soll, daß eine möglichst geringe Probenverschleppung erreicht wird.

Gelöst wird diese Aufgabe durch eine Probenaufgabe-Anordnung für ein HPLC-System, bei welcher Einweg-Pipettierspitzen von verschiedener Art eingesetzt werden, nämlich zum einen Probentransfer-Einweg-Pipettierspitzen für ein Injizieren oder einen Transfer von zumindest einer Probe bzw. einer Probenlösung in das HPLC-System, und zum anderen Waschlösung-Einweg-Pipettierspitzen für einen Wasch- oder Spülvorgang. Das Waschen erfolgt somit mit einer anderen Einweg-Pipettierspitze als die Probenaufgabe. Ebenso umfaßt die erfindungsgemäße Probenaufgabe-Anordnung einen Injektionsadapter als Teil einer Injektionseinheit, wobei diese ein Injektorventil und einen Ventilantrieb aufweist. Die jeweiligen, voneinander verschiedenen Probentransfer-Einweg-Pipettierspitzen und Waschlösung-Einweg-Pipettierspitzen sind für den Eingriff in den Injektionsadapter ausgebildet. Dieser Injektionsadapter ist entsprechend mit einem Innenraum versehen, der als ein Hohlraum ausgebildet ist. Der Injektionsadapter verjüngt sich von seiner Probenaufnahme-seitigen Öffnung in Richtung auf die Injektionseinheit in der Weise, daß er definierte, voneinander verschiedene Anlagebereiche als Dichtbereiche für die Probentransfer-Einweg-Pipettierspitze einerseits und die Waschlösung-Einweg-Pipettierspitze andererseits ausbildet. Dadurch greift die Probentransfer-Einweg-Pipettierspitze, in Richtung auf die Injektionseinheit betrachtet, tiefer in den Injektionsadapter ein als die Waschlösung-Einweg-Pipettierspitze.

Dies hat zur Folge, daß der Bereich, welcher durch den Kontakt mit einer Probe bzw. Probenlösung kontaminiert wird, kleiner ist als der Bereich, welcher als Waschlösungs-Kontaminationsbereich oder allgemein als der Bereich bezeichnet werden kann, der in Kontakt mit der Waschlösung kommt. Dadurch kann der durch die Probe bzw. Probenlösung kontaminierte Bereich sehr effektiv gewaschen werden, und das Waschen des durch die Probe bzw. Probenlösung kontaminierten Bereichs wird so gestaltet, daß eine Probenverschleppung in einfacher Weise zumindest auf eine nicht mehr relevante Größenordnung reduziert wird.

Gemäß einer Weiterbildung der erfindungsgemäßen Probenaufgabe-Anordnung ist die Probentransfer-Einweg-Pipettierspitze in ihrer Formgebung relativ zu der Waschlösung-Einweg-Pipettierspitze schmaler und schlanker ausgebildet. Auf diese Weise wird besonders einfach erreicht, daß die Probentransfer-Einweg-Pipettierspitze in Richtung auf die Injektionseinheit tiefer in den Injektionsadapter eingreift als die Waschlösung-Einweg-Pipettierspitze. Eine Probenverschleppung wird zumindest auf eine nicht relevante Größenordnung reduziert.

In einer bevorzugten Ausführungsform verjüngt sich der Hohlraum des Injektionsadapters absatzweise unter Ausbildung von definierten Dichtkanten.

Besonders bevorzugt ist, daß die als Anlagebereiche für die Probentransfer-Einweg-Pipettierspitze einerseits und die Waschlösung-Einweg-Pipettierspitze andererseits ausgebildeten Dichtbereiche des Hohlraums des Injektionsadapters als Dichtkanten gebildet sind und zusammen mit der Probentransfer-Einweg-Pipettierspitze oder der Waschlösung-Einweg-Pipettierspitze jeweils eine Dichtfläche definieren, wobei diese Dichtfläche im Hinblick auf die jeweiligen Einweg-Pipettierspitzen stirnseitig oder an deren Außenseiten gebildet ist. Dies hängt jeweils von der Form der Einweg-Pipettierspitze ab und trägt unter anderem der Tatsache Rechnung, daß die Waschlösung-Einweg-Pipettierspitze weniger schlank und damit auch in ihrem vorderen Spitzenbereich deutlich rundlicher ausgebildet sein kann als die Probentransfer-Einweg-Pipettierspitze.

Gemäß einer Weiterbildung der erfindungsgemäßen Probenaufgabe-Anordnung ist der Injektionsadapter fest mit dem Injektorventil verbunden und diese Einheit befindet sich auf einem Federpaket. Durch dieses ist die Andruckkraft zwischen der jeweiligen Einweg-Pipettierspitze und dem Injektionsadapter bestimmt.

Auf diese Weise ist die Dichtigkeit zwischen dem Injektorventil mit dem Injektionsadapter einerseits und der jeweiligen Einweg-Pipettierspitze durch eine variable Andruckkraft gewährleistet, wobei auch noch zu berücksichtigen ist, daß die Andruckkraft zusätzlich durch den Motor als Antrieb für die jeweilige Einweg-Pipettierspitzen bestimmt ist.

Die Erfindung betrifft auch ein Verfahren zur Probenaufgabe in einem HPLC-System mit Einweg-Pipettierspitzen, bei dem zumindest eine Probe bzw. Probenlösung über eine Probentransfer-Einweg-Pipettierspitze in einen Injektionsadapter als Teil einer Injektionseinheit des HPLC-Systems injiziert wird, anschließend ein Waschvorgang mit einer von der Probentransfer-Einweg-Pipettierspitze in der Form unterschiedlichen Waschlösung-Einweg-Pipettierspitze durchgeführt wird, das Abdichten zwischen der Probentransfer-Einweg-Pipettierspitze und der Waschlösung-Einweg-Pipettierspitze und dem Injektionsadapter über auf die jeweiligen Einweg-Pipettierspitzen abgestimmte unterschiedliche Dichtbereiche in dem Injektionsadapter und in Zusammenwirkung mit einem definierten Andruck erfolgt, und der Waschbereich in dem Injektionsadapter über die Form der Waschlösung-Einweg-Pipettierspitze und ihre Anlage an den korrespondierenden Dichtbereich in dem Injektionsadapter größer gewählt wird als der ProbentransferBereich.

Besonders vorteilhaft kann das erfindungsgemäße Verfahren eingesetzt werden, wenn die Probenaufgabe mittels eines Pipettier-Roboters automatisch erfolgt.

Des weiteren ist vorteilhaft, daß der Andruck als variable Andruckkraft gewählt wird. Diese ist über die Federkaft des Federpakets steuerbar.

Ganz besonders bevorzugt ist, daß die Probentransfer-Einweg-Pipettierspitze, in Richtung auf die Injektionseinheit betrachtet, tiefer in den Injektionsadapter eingeführt wird als die Waschlösung-Einweg-Pipettierspitze.

Die Vorzüge dieser Vorgehensweise sind weiter oben im Hinblick auf die erfindungsgemäße Probenaufgabe-Anordnung bereits erläutert worden. Durch den Probentransfer wird ein kleinerer Bereich im Injektionsadapter kontaminiert als durch die Waschlösung bei dem Transfer der Waschlösung gewaschen wird.

Im folgenden soll die Erfindung anhand eines Ausführungsbeispiels im Zusammenhang mit der beigefügten Zeichnung näher erläutert werden.

Es zeigen:
- Fig. 1a:: eine schematisch dargestellte Einweg-Pipettierspitze und einen dazu korrespondierenden Injektionsadapter für die Aufnahme und den Transfer einer Probe in ein HPLC-System,
- Fig. 1b:: eine schematisch dargestellte Einweg-Pipettierspitze für das Waschen oder Spülen des Injektionsadapter und den dazu korrespondierenden Injektionsadapter nach Fig. 1a,
- Fig.2a:: eine schematisch dargestellte HPLC-Injektionseinheit mit dem Injektionsadapter nach Fig. 1a auf einem Federlager und mit einer Ventilstellung für das Laden einer Probe, und
- Fig.2b:: eine schematisch dargestellte HPLC-Injektionseinheit nach Fig. 2a mit einer Ventilstellung für das Waschen oder Spülen des Injektionsadapters.

Im Rahmen dieses Ausführungsbeispiels wird eine erfindungsgemäße Probenaufgabe-Anordnung für ein HPLC-System beschrieben, bei welcher das Injizieren von Proben in das HPLC-System direkt und automatisch unter der Verwendung von Einweg-Pipettierspitzen erfolgt. Der dafür erforderliche Pipettier-Automat oder -Roboter ist im übrigen in aus dem Stand der Technik bekannter Weise ausgebildet. Dasselbe gilt für die HPLC-Anlage als solcher.

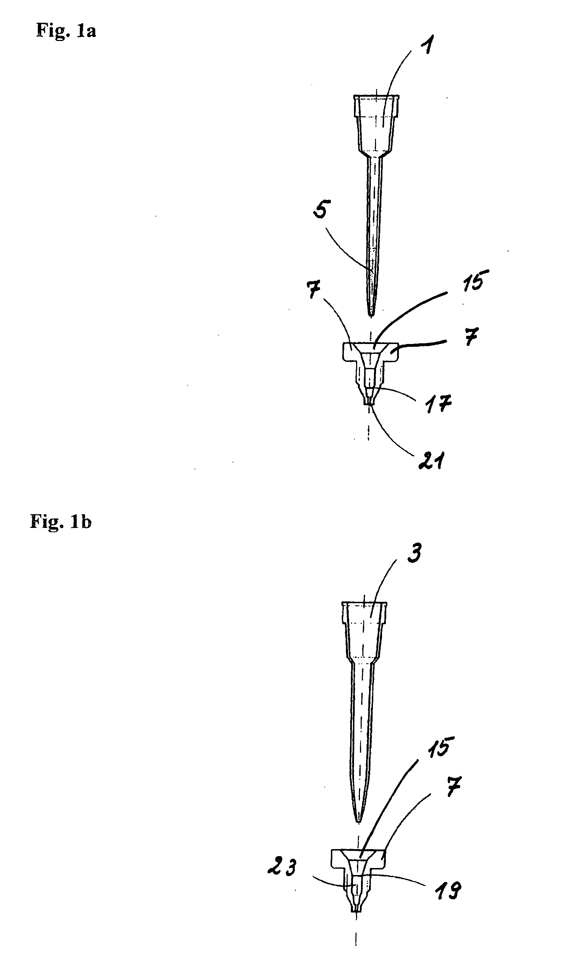

Im Rahmen der erfindungsgemäßen Probenaufgabe-Anordnung ist einerseits jeweils eine Einweg-Pipettierspitze für den Probentransfer in das HPLC-System und andererseits jeweils eine weitere Einweg-Pipettierspitze für den als solches grundsätzlich üblichen Wasch- oder Spülvorgang zur Verringerung oder Vermeidung einer Kontamination durch Probenverschleppung vorgesehen. Die Einweg-Pipettierspitze für den Probentransfer wird im folgenden als Probentransfer-Einweg-Pipettierspitze 1 bezeichnet, welche in Fig. 1a näher dargestellt ist. Die Einweg-Pipettierspitze für den Wasch- oder Spülvorgang wird entsprechend als Waschlösung-Einweg-Pipettierspitze 3 bezeichnet. Diese ist in Fig. 1b gezeigt.

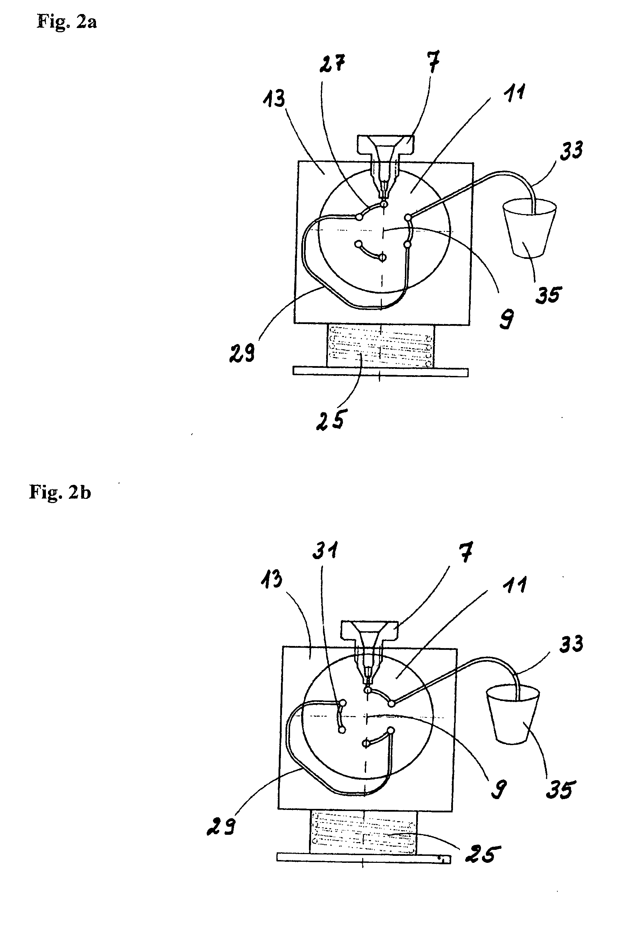

Mit der Probentransfer-Einweg-Pipettierspitze 1 wird eine zu analysierende Probe 5 in das HPLC-System überführt. Dazu wird sie in einen Injektionsadapter 7 eingeführt, der auch aus Fig. 1a zu ersehen ist. Dieser Injektionsadapter 7 ist Teil einer HPLC-Injektionseinheit 9 und mit einem Injektorventil 11 und einem Ventilantrieb 13 der HPLC-Injektionseinheit 9 fest verbunden, wie die Fig. 2a und 2b zeigen.

Der Injektionsadapter 7 weist einen als Hohlraum 15 ausgebildeten Innenraum auf, der sich von seiner Öffnung für die Aufnahme der jeweiligen Einweg-Pipettierspitze, und damit auch für die Aufnahme der Probe, hin zu dem entgegengesetzten, mit dem Injektorventil 11 der HPLC-Injektionseinheit 9 verbundenen Ende verjüngt. Diese Verjüngung erfolgt in der Ausführungsform dieses zum Zwecke der Erläuterung der Erfindung beschriebenen Beispiels absatzweise. Für den Fachmann ergibt sich jedoch nach Erläuterung des Zwecks des sich verjüngenden Innenraums, daß sich dieser Innenraum nicht zwangsläufig absatzweise verjüngen muß. Es kann auch eine kontinuierliche Verjüngung dieses Innenraums vorgesehen sein.

Probentransfer-Einweg-Pipettierspitze 1 und Waschlösung-Einweg-Pipettierspitze 3 sind jeweils voneinander verschieden und für den Eingriff in den Injektionsadapter 7 geeignet ausgebildet. Die Probentransfer-Einweg-Pipettierspitze 1 ist dabei in ihrer Formgebung relativ zu der Waschlösung-Einweg-Pipettierspitze 3 zwar vergleichbar, aber schmaler und schlanker ausgebildet. Dadurch ragt sie tiefer in den sich verjüngenden Innenraum des Injektionsadapters 7 hinein als die Waschlösung-Einweg-Pipettierspitze 3.

Wird die Probentransfer-Einweg-Pipettierspitze 1 in den Innenraum des Injektionsadapters 7 eingeführt, in der Regel, um die jeweilige(n) Probe(n) in das HPLC-System zu überführen, bis sie an der Innenwandung des Hohlraums 15 des Injektionsadapters 7 anliegt, bildet diese Anlagefläche der Probentransfer-Einweg-Pipettierspitze 1 eine Dichtung. Bei dem sich absatzweise verjüngenden Innenraum des Injektionsadapters 7 gemäß diesem Ausführungsbeispiel wird dadurch entsprechend eine Dichtkante definiert, die als Probendichtkante bezeichnet und in Fig. 1a mit der Bezugsziffer 17 versehen ist.

Wird dann anschließend die Waschlösung-Einweg-Pipettierspitze 3 für den Waschvorgang in den Innenraum des Injektionsadapters 7 eingeführt, bis sie ihrerseits an der Innenwandung des Hohlraums 15 des Injektionsadapters 7 anliegt, bildet diese Anlagefläche der Waschlösung-Einweg-Pipettierspitze 3 ebenfalls eine Dichtung. Bei dem sich absatzweise verjüngenden Innenraum des Injektionsadapters 7 gemäß diesem Ausführungsbeispiel wird dadurch eine Dichtkante definiert, die als Waschdichtkante bezeichnet und in Fig. 1b mit der Bezugsziffer 19 versehen ist.

Durch die relativ zu der Waschlösung-Einweg-Pipettierspitze 3 schlanke(re) Form der Probentransfer- Einweg Pipettier Spitze 1 befindet sich die Probendichtkante 17, in Richtung auf die HPLC-Injektionseinheit 9 betrachtet, tiefer im Injektionsadapter 7 als die Waschdichtkante 19, welche von der relativ gesehen dickeren Waschlösung- Einweg Pipettier Spitze 3 abgedichtet wird. Als Folge davon ist der Proben-Kontaminations-Bereich 21 kleiner als der Waschlösungs-Kontaminations-Bereich 23.

Der Injektionsadapter 7 weist somit für die unterschiedlichen Einweg-Pipettierspitzen 1, 3 unterschiedliche Dichtbereiche auf.

Die jeweilige Einweg-Pipettierspitze 1, 3 und die Dichtkanten 17, 19, welche an dem sich verjüngenden Innenraum des Injektionsadapters 7 gebildet sind, definieren jeweils eine Dichtfläche, wobei diese Dichtfläche zwischen der Einweg-Pipettierspitze 1, 3 und dem Innenraum des Injektionsadapters 7 im Hinblick auf die jeweiligen Einweg-Pipettierspitzen 1, 3 sowohl stirnseitig als auch an deren Außenseiten gebildet sein kann.

Um den Andruck und damit die Dichtheit für den Vorgang der Probenaufgabe mit der Probentransfer-Einweg-Pipettierspitze 1 wie für den Waschvorgang mit der Waschlösung-Einweg-Pipettierspitze 3 gleichbleibend zu gewährleisten, befindet sich das Injektorventil 11 und damit auch der mit diesem Injektorventil 11 verbundene Injektionsadapter 7 auf einem Federpaket 25. Dies veranschaulichen die Fig. 2a, 2b. Der Andruck der Probentransfer-Einweg-Pipettierspitze 1 bei der Probenaufgabe und der Waschlösung-Einweg-Pipettierspitze 3 bei dem Waschvorgang erfolgt somit über dieses Federpaket 25. Mit anderen Worten bestimmt einerseits das Federpaket 25 die Andruckkraft zwischen der Probentransfer-Einweg-Pipettierspitze 1 bzw. Waschlösung-Einweg-Pipettierspitze 3 und dem Injektionsadapter 7 und andererseits der bei der automatischen Probenaufgabe in üblicher Weise vorhandene Motor als Antrieb für die Einweg-Pipettierspitzen.

Die Dichtigkeit zwischen dem Injektorventil 11 mit dem Injektionsadapter 7 und den jeweiligen Einweg-Pipettierspitzen 1, 3 ist durch eine variable Andruckkraft gegeben.

Die Fig. 2a, 2b zeigen die Injektionseinheit 9, mit dem schon genannten Injektorventil 11, dem Ventilantrieb 13 und dem Injektionsadapter 7, welche sich als fixe Einheit auf dem Federpaket 25 befindet.

In der Lade-Ventilstellung 27, wie Fig. 2a sie veranschaulicht, wird die Probe mit dem Pipettier-Automat unter Einsatz der Probentransfer-Einweg-Pipettierspitze 1, wie zuvor beschrieben, in die Injektions-Schlaufe 29 gedrückt.

In der Injektions-Ventilstellung 31, wie Fig. 2b sie zeigt, kann der Injektionsadapter 7 über das Injektorventil 11 mit dem Pipettier-Automaten unter Verwendung der zuvor beschriebenen Waschlösung-Einweg-Pipettierspitze 3 gespült werden. Die Spüllösung wird über den Überlauf 33 in den Abfall 35 geführt.

Es handelt sich somit erfindungsgemäß um ein HPLC-Injektionssystem, bei dem Probenlösung und Waschlösung mittels Einweg-Pipettier-Spitzen 1, 3 über den Injektionsadapter 7 in das HPLC-System überführt werden, die Abdichtung zwischen den Einweg-Pipettierspitzen 1, 3 und dem Injektionsadapter 7 über Pipetten-Spitzen-Typ-spezifische unterschiedliche Dichtkanten und mit definiertem Andruck erfolgt, der Proben-(lösungs)-Transfer und der Waschlösungstransfer mit unterschiedlichen Einweg-Pipettenspitzen erfolgt und der Waschbereich im Injektionsadapter 7 größer ist als der durch die Probe 5 oder Probenlösung kontaminierte Bereich.

Insgesamt wird durch die für die verwendeten Einweg-Pipettierspitzen 1,3 spezifischen Dichtflächen und Dichtkanten 17, 19 in dem Injektionsadapter 7, die definierte Andruckkraft für die Dichtung zwischen den jeweiligen Einweg-Pipettierspitzen 1,3 und dem Injektionsadapter 7 sowie die Nutzung unterschiedlicher Einweg-Pipettierspitzen 1,3 für die Probe und für die Waschlösung bzw. das Wasch-Lösungsmittel die Verschleppung der zu untersuchenden Proben auf ein Minimum reduziert und gleichzeitig das Waschen des Injektionsadapters 7 und des Injektorventils 11 wesentlich vereinfacht.

## Patentansprüche

1. Probenaufgabe-Anordnung für ein HPLC-System, mit Einweg-Pipettierspitzen, die eine Probentransfer-Einweg-Pipettierspitze (1) für ein Injizieren oder einen Transfer von zumindest einer Probe in das HPLC-System und eine Waschlösung-Einweg-Pipettierspitze (3) für einen Wasch- oder Spülvorgang umfassen, und mit einem Injektionsadapter (7) als Teil einer Injektionseinheit (9), die ein Injektorventil (11) und einen Ventilantrieb (13) aufweist, wobei Probentransfer-Einweg-Pipettierspitze (1) und Waschlösung-Einweg-Pipettierspitze (3) voneinander verschieden und für den Eingriff in den Injektionsadapter (7) ausgebildet sind und der Injektionsadapter (7) mit einem Hohlraum (15) versehen ist, der sich von seiner Probenaufnahme-seitigen Öffnung in Richtung auf die Injektionseinheit (9) in der Weise verjüngt, daß er definierte, voneinander verschiedene Anlagebereiche als Dichtbereiche für die Probentransfer-Einweg-Pipettierspitze (1) einerseits und die Waschlösung-Einweg-Pipettierspitze (3) andererseits ausbildet, und wobei die Probentransfer-Einweg-Pipettierspitze (1) in Richtung auf die Injektionseinheit tiefer in den Injektionsadapter (7) eingreift als die Waschlösung-Einweg-Pipettierspitze (3).

2. Probenaufgabe-Anordnung nach Anspruch 1, **dadurch gekennzeichnet, daß** die Probentransfer-Einweg-Pipettierspitze (1) in ihrer Formgebung relativ zu der Waschlösung-Einweg-Pipettierspitze (3) schmaler und schlanker ausgebildet ist.

3. Probenaufgabe-Anordnung nach Anspruch 1 oder 2, **gekennzeichnet durch** einen sich absatzweise unter Ausbildung von definierten Dichtkanten verjüngenden Hohlraum (15) des Injektionsadapters (7).

4. Probenaufgabe-Anordnung nach einem der Ansprüche 1 bis 3, **dadurch gekennzeichnet, daß** die als Anlagebereiche für die Probentransfer-Einweg-Pipettierspitze (1) einerseits und die Waschlösung-Einweg-Pipettierspitze (3) andererseits ausgebildeten Dichtbereiche des Hohlraums (15) des Injektionsadapters (7) als Dichtkanten gebildet sind und zusammen mit der Probentransfer-Einweg-Pipettierspitze (1) oder der Waschlösung-Einweg-Pipettierspitze (3) jeweils eine Dichtfläche definieren, wobei diese Dichtfläche im Hinblick auf die jeweiligen Einweg-Pipettierspitzen (1,3) stirnseitig oder an deren Außenseiten gebildet ist.

5. Probenaufgabe-Anordnung nach einem der Ansprüche 1 bis 4, **dadurch gekennzeichnet, daß** der Injektionsadapter (7) mit dem Injektorventil (11) fest verbunden ist, daß sich diese Einheit auf einem Federpaket (25) befindet, und daß dadurch die Andruckkraft zwischen der jeweiligen Einweg-Pipettierspitze (1, 3) und dem Injektionsadapter (7) bestimmt ist.

6. Probenaufgabe-Anordnung nach Anspruch 5, **dadurch gekennzeichnet, daß** die Andruckkraft zusätzlich durch den Motor als Antrieb für die jeweilige Einweg-Pipettierspitzen (1, 3) bestimmt ist.

7. Verfahren zur Probenaufgabe in einem HPLC-System mit Einweg-Pipettierspitzen, bei dem zumindest eine Probe über eine Probentransfer-Einweg-Pipettierspitze (1) in einen Injektionsadapter (7) als Teil einer Injektionseinheit (9) des HPLC-Systems injiziert wird, anschließend ein Waschvorgang mit einer von der Probentransfer-Einweg-Pipettierspitze (1) in der Form unterschiedlichen Waschlösung-Einweg-Pipettierspitze (3) durchgeführt wird, das Abdichten zwischen der Probentransfer-Einweg-Pipettierspitze (1) und der Waschlösung-Einweg-Pipettierspitze (3) und dem Injektionsadapter (7) über auf die jeweiligen Einweg-Pipettierspitzen (1, 3) abgestimmte unterschiedliche Dichtbereiche in dem Injektionsadapter (7) und in Zusammenwirkung mit einem definierten Andruck erfolgt, und der Waschbereich in dem Injektionsadapter (7) über die Form der Waschlösung-Einweg-Pipettierspitze (3) und ihre Anlage an den korrespondierenden Dichtbereich in dem Injektionsadapter (7) größer gewählt wird als der Probentransferbereich.

8. Verfahren nach Anspruch 7, **dadurch gekennzeichnet, daß** die Probenaufgabe mittels eines Pipettier-Roboters automatisch erfolgt.

9. Verfahren nach Anspruch 7 oder 8, **dadurch gekennzeichnet, daß** der Andruck als variable Andruckkraft gewählt wird.

10. Verfahren nach einem der Ansprüche 7 bis 9, **dadurch gekennzeichnet, daß** die Probentransfer-Einweg-Pipettierspitze (1) in Richtung auf die Injektionseinheit tiefer in den Injektionsadapter (7) eingeführt wird als die Waschlösung-Einweg-Pipettierspitze (3).
